# EUROPÄISCHE PATENTANMELDUNG

(11) **EP 1 510 323 A2**
(43) Veröffentlichungstag der Anmeldung: **02.03.2005**
(21) Anmeldenummer: 04019132.2
(22) Anmeldetag: 12.08.2004
(51) Int. Cl.: B29C 44/12, B29C 44/34

(54) **Verfahren und Vorrichtung zur Herstellung eines geschäumten Formteils**

(30) Priorität: 28.08.2003 DE 10340126
(71) Anmelder: CeraCon GmbH, 97990 Weikersheim (DE)
(72) Erfinder: Kukla, Frank, Dr., 97080 Würzburg (DE)
(74) Vertreter: von den Steinen, Axel

(57) **Zusammenfassung**

Die Erfindung betrifft ein Verfahren und eine Vorrichtung zur Herstellung eines geschäumten Formteils (09) mit folgenden Verfahrensschritten:
a) Mischen von Gas in ein temperaturhärtendes Material,
b) Aufbringen von Druck auf das Gemisch (07) aus Gas und temperaturhärtendem Material,
c) Durchleiten des druckbeaufschlagten Gemischs (07) durch eine Mischeinrichtung, die das Verteilen des Gases im Inneren des temperaturhärtenden Materials ermöglicht,
d) Schäumen des temperaturhärtenden Materials durch Auslassen des Gemischs (07) auf eine wärmeübertragende Oberfläche (01, 08), deren Temperatur oberhalb der Auslasstemperatur des Gemischs (07) liegt,
e) Härten des Gemischs (07) in Gestalt des gewünschten Formteils (09) durch Beheizen des temperaturhärtenden Materials mittels von der Oberfläche (01, 08) auf das temperaturhärtende Material übergehender Wärme.

## Beschreibung

Die Erfindung betrifft ein Verfahren und eine Vorrichtung zur Herstellung eines geschäumten Formteils nach den Oberbegriffen der unabhängigen Hauptansprüche.

Ein gattungsbildendes Verfahren bzw. eine gattungsgemäße Vorrichtung ist in der DE 696 11 814 T2 beschrieben. Grundidee des gattungsgemäßen Verfahrens ist es, in einfacher Weise eine schäumbare Formmasse herzustellen. Das Aufschäumen der Formmasse geschieht dabei auf physikalischer Grundlage durch Einmischen eines Gases in ein entsprechend geeignetes Material, wobei das Gemisch anschließend unter Druck gesetzt wird. Beim Auslassen des Gemisches schäumt das Gemisch auf Grund des dabei auftretenden Druckabfalls auf, da sich das in das Material eingemischte Gas entsprechend entspannt.

Einen großen Vorteil bietet das in der DE 696 11 814 T2 beschriebene Verfahren dahingehend, dass keine zwei chemischen Reaktionskomponenten miteinander gemischt werden müssen, wie es beispielsweise bei der Herstellung von Polyurethanschaum ansonsten üblich ist.

Nachteilig an dem aus der DE 696 11 814 T2 beschriebenen Verfahren ist es, dass die in dieser Weise hergestellten Formteile auf Grund der fehlenden chemischen Reaktion relativ lange Aushärtzeiten benötigen. Zur Lösung dieses Problems wird in der DE 696 11 814 T2 beschrieben, dass dem Gemisch ein chemisch wirkender Härter beigemischt werden kann, um auf diese Weise die Aushärtzeit zu verkürzen. Dies führt im Ergebnis jedoch zu den bekannten Problemen bei der Verarbeitung von Zweikomponentenschäumen, die insbesondere in der aufwändigen Reinigung der verwendeten Werkzeuge liegen.

Ausgehend von diesem Stand der Technik ist es deshalb Aufgabe der vorliegenden Erfindung, ein neues Herstellungsverfahren und eine entsprechend geeignete Vorrichtung zur Herstellung von geschäumten Formteilen vorzuschlagen, mit denen es möglich ist, die Verarbeitungszeit zu verkürzen.

Diese Aufgabe wird durch ein Verfahren und eine Vorrichtung nach der Lehre der beiden unabhängigen Hauptansprüche gelöst.

Vorteilhafte Ausführungsformen der Erfindung sind Gegenstand der Unteransprüche.

Die Erfindung beruht auf dem Grundgedanken, das aufgeschäumte Gemisch aus Gas und härtbarem Material auf eine wärmeübertragende Oberfläche eines Werkzeuges und/oder Werkstückes direkt aufzubringen. Die im Werkzeug bzw. Werkstück gespeicherte Wärme wird auf diese Weise sehr direkt und sehr schnell auf die geschäumte Masse übertragen. Da zur Herstellung der geschäumten Masse ein temperaturhärtendes Material verwendet wird, ist durch die vom Werkzeug bzw. Werkstück abgegebene Wärme eine sehr rasche Aushärtung des geschäumten Gemischs erzielbar. Das sonst übliche Aushärten des geschäumten Formteils, beispielsweise durch Einsatz eines Wärmeofens, kann somit entfallen. Die Prozesszeiten zum Aushärten des geschäumten Formteils können von einigen Minuten auf wenige Sekunden verkürzt werden. An der erfindungsgemäßen Vorrichtung ist zum Erwärmen des Werkzeuges und/oder des Werkstückes eine Heizeinrichtung vorgesehen, mit der die erforderliche Prozesswärme nachgefördert werden kann.

Welche Temperaturen das Gemisch aus Gas und temperaturhärtendem Material einerseits und die wärmeübertragende Oberfläche des Werkzeuges bzw. Werkstückes andererseits aufweisen, ist erfindungsgemäß grundsätzlich beliebig, solange die Temperaturdifferenz zumindest so groß ist, dass eine ausreichende Aushärtung des geschäumten Gemisches innerhalb ausreichend kurzer Prozesszeit erreichbar ist. Nach einer bevorzugten Ausführungsform weist das Gemisch aus Gas und temperaturhärtendem Material ungefähr Raumtemperatur, d.h. eine Temperatur im Bereich zwischen 5 °C und 35 °C, auf. Auf diese Weise können besondere Einrichtungen zur Temperierung des Gemisches aus Gas und temperaturhärtendem Material entfallen.

Als besonders geeignet zur Aushärtung des geschäumten Gemisches hat sich ein Temperaturband im Bereich von 60 °C bis 150 °C erwiesen. Insbesondere das Temperaturband von 80 °C bis 120 °C ist zur ausreichend schnellen Härtung der meisten Formstoffe hervorragend geeignet.

Um eine Schädigung des Materials durch zu hohe Temperaturen einerseits und eine nicht ausreichende Aushärtung durch zu geringe Temperaturen andererseits zuverlässig ausschließen zu können, ist es besonders vorteilhaft, wenn die Temperatur der wärmeübertragenden Oberfläche mit einem Temperaturregelkreis geregelt wird. Auf diese Weise wird die Temperatur der wärmeübertragenden Oberfläche in einem engen Band um die gewünschte Soll-Temperatur geregelt, so dass hohe Prozesssicherheit erreicht wird.

Welche geometrische Gestalt das Werkzeug, das Werkstück oder die Kombination aus Werkzeug und Werkstück bilden, ist grundsätzlich beliebig. Beispielsweise ist es denkbar, dass das geschäumte Gemisch auf einer offenen Fläche eines Werkstückes in der Art einer Materialraupe aufgebracht wird, um auf diese Weise ein Dichtelement an das Werkstück anzuformen. Diese Art der Verarbeitung hat jedoch den Nachteil, dass die Wärmeverteilung in der geschäumten Masse sehr ungleichmäßig ist, da die Wärme vom Werkzeug bzw. Werkstück nur von einer Seite aus in das Gemisch übergehen kann. Außerdem ist die geometrische Form der auf diese Weise hergestellten Formteile statistischen Schwankungen unterworfen. Diese Probleme können dadurch verringert bzw. vermieden werden, dass das Werkzeug, das Werkstück oder die Kombination aus Werkzeug und Werkstück ein geschlossenes Formnest bilden, in das das Gemisch eingefördert wird und dort aufschäumt. Auf diese Weise kann die erforderliche Prozesswärme von allen Seiten des Formnestes in das geschäumte Gemisch übergehen.

Für viele Anwendungsfälle ist es erforderlich, dass an einem Werkstück ein geschäumtes Formteil, beispielsweise in der Form eines Dichtungselements, in der Form eines Dämpfungselements oder in der Form eines Isolatorelements, vorhanden ist. Dies kann konventionell dadurch erreicht werden, dass ein zuvor geschäumtes Formteil in geeigneter Weise an dem Werkstück befestigt wird, beispielsweise durch Anschrauben oder Ankleben. Besonders rationell und kostengünstig lassen sich derartige Bauteile herstellen, wenn das geschäumte Formteil an das entsprechende Werkstück angeschäumt wird. Auf diese Weise kann der Arbeitsgang zur Befestigung des geschäumten Formteils am Werkstück eingespart werden, da durch das Anschäumen des schäumbaren Gemisches an dem Werkstück eine mechanisch belastbare Verbindung herstellbar ist.

In welcher Weise das geschäumte Formteil an das Werkstück angeschäumt wird, ist grundsätzlich beliebig. Nach einer ersten Verfahrensvariante wird das entsprechende Werkstück in ein geeignetes Werkzeug, beispielsweise eine Spritzgussform, eingelegt. Im Werkzeug verbleibt nach dem Einlegen des Werkstücks eine Kavität, die das Formnest zur Bildung des geschäumten Formteils bildet. Nach dem Einlegen des Werkstückes in das Werkzeug wird dieses Formnest mit dem Gemisch aus Gas und temperaturhärtendem Material befüllt, wobei das Formnest durch die Entspannung des Gemisches ausgeschäumt wird. Nach Aushärten des temperaturhärtenden Materials kann die Form geöffnet werden und das Werkstück mit angeschäumtem Formteil entnommen werden.

Soll das geschäumte Formteil an ein in ein Werkzeug eingelegtes Werkstück angeschäumt werden, ist es besonders vorteilhaft, wenn das Werkstück unmittelbar vor dem Einlegen in das Werkzeug in einem anderen Werkzeug, beispielsweise durch Spritzgießen, hergestellt wird. Das Werkstück sollte dabei ohne wesentliche Abkühlung aus dem vorgelagerten Werkzeug in das nachgeordnete Werkzeug umgesetzt werden, damit die im Werkstück gespeicherte Prozesswärme zum Aushärten des geschäumten Gemisches genutzt werden kann.

Nach einer alternativen Verfahrensvariante werden das Werkstück und das daran angeschäumte Formteil in einem Werkzeug gemeinsam hergestellt. Dieses Werkzeug muss dazu ein in zumindest zwei Bereiche teilbares Formnest aufweisen. Bei der Herstellung solcher Bauteile wird zunächst ein erster Bereich des Formnests unter Herstellung eines Werkstückes mit einer härtbaren Formmasse, beispielsweise einem Thermoplast, befüllt. Sobald die Formmasse des Werkstückes ausreichend ausgehärtet ist, wird das Trennelement zwischen dem ersten Bereich und dem zweiten Bereich des Formnests geöffnet, um auf diese Weise die beiden Bereiche zumindest abschnittsweise zu verbinden. Anschließend wird der dann noch hohle zweite Bereich des Formnests mit dem Gemisch aus Gas und temperaturhärtendem Material ausgeschäumt, so dass sich Werkstück und geschäumtes Formteil miteinander verbinden. Nach Aushärten des temperaturhärtenden Materials kann das Werkzeug dann geöffnet werden und das Bauteil, das aus dem Werkstück und dem daran angeschäumten Formteil besteht, entnommen werden.

Nach einer besonders bevorzugten Ausführungsform der erfindungsgemäßen Vorrichtung ist das Trennelement zur Teilung des Formnests im Werkzeug in der Art eines Schiebers ausgebildet. Je nach Stellung des Schiebers wird der eine Bereich des Formnests vom anderen Bereich des Formnests getrennt, wobei es in vielen Fällen vorteilhaft ist, wenn der Schieber den zweiten Bereich des Formnests in der geschlossenen Stellung vollständig ausfüllt, so dass ein Eindringen des härtbaren Formstoffes aus dem ersten Bereich in den zweiten Bereich ausgeschlossen ist.

Besonders preisgünstig und rationell lassen sich Bauteile mit angeschäumtem Formteil im Spritzgussverfahren herstellen. Das Werkzeug zur Aufnahme des schäumbaren Gemischs sollte deshalb vorzugsweise in der Art einer Spritzgussform ausgebildet sein.

Bei einigen Verfahrensvarianten, beispielsweise bei der Herstellung von Bauteilen im Spritzgussverfahren, ist es beinahe unvermeidlich, dass die Auslasseinrichtung in unmittelbaren Kontakt mit dem nachgeordneten Werkzeug und/oder Werkstück gebracht wird. Da erfindungsgemäß ein temperaturhärtendes Material zur Herstellung der geschäumten Formmasse verwendet wird und zugleich das Werkstück bzw. das Werkzeug zum Aushärten der Formmasse erfindungsgemäß erwärmt wird, ergibt sich aus dem unmittelbaren Kontakt zwischen Auslasseinrichtung und nachgeordnetem Werkzeug bzw. Werkstück das Problem, dass die am Werkzeug bzw. Werkstück vorhandene Wärme auch auf die Auslasseinrichtung übergeht, was zu einem unerwünschten vorzeitigen Aushärten des Materials in der Auslasseinrichtung führen kann. Nach einer bevorzugten Ausführungsform ist deshalb an der Leitung der Auslasseinrichtung, die zur Führung des Gemisches aus Gas und temperaturhärtendem Material vorgesehen ist, eine Kühleinrichtung vorhanden, mit der entsprechende Leitungsabschnitte gekühlt werden können. Im Ergebnis ist es somit möglich, das Gemisch aus Gas und temperaturhärtendem Material in der Auslasseinrichtung auf einer Temperatur zu halten, die unterhalb einer kritischen Temperatur liegt, bei der das temperaturhärtende Material anfängt auszuhärten.

Um ein Überschreiten der kritischen Temperatur des temperaturhärtenden Materials in der Auslasseinrichtung zuverlässig ausschließen zu können, kann ein Temperaturregelkreis vorgesehen werden, mit dem die gemessene Ist-Temperatur auf einer eingestellten Soll-Temperatur unterhalb der kritischen Temperatur geregelt wird.

Um eine effektive Kühlung des Gemisches aus Gas und temperaturhärtbarem Material in der Auslasseinrichtung zu ermöglichen, sollten die mit der Kühleinrichtung kühlbaren Leitungsabschnitte aus einem hoch wärmeleitfähigen Material, beispielsweise auf Kupferbasis, hergestellt sein. Auf diese Weise kann die im Gemisch vorhandene Wärme sehr rasch abgeführt werden, so dass ein Beginn des Aushärtprozesses in der Auslasseinrichtung ausgeschlossen ist.

Um die unerwünschte Übertragung von Wärme aus dem nachgeordneten Werkzeug bzw. Werkstück, das erfindungsgemäß erwärmt wird, zu verringern bzw. zu vermeiden, kann an der Außenseite der Auslasseinrichtung eine Wärmeisolation vorgesehen werden. Die Teile dieser Wärmeisolation, die insbesondere in den Bereichen der Auslasseinrichtung angeordnet werden können, die in unmittelbarem Kontakt mit dem nachgeordneten Werkzeug bzw. Werkstück gebracht werden, sind aus einem wärmeisolierenden Material, insbesondere aus einem wärmeisolierenden Metall, hergestellt.

Die konstruktive Ausbildung der Auslasseinrichtung ist erfindungsgemäß grundsätzlich beliebig und kann an die Erfordernisse der jeweiligen Verfahrensvariante angepasst werden. Eine besonders einfach und kostengünstig zu realisierende Möglichkeit ist es, wenn die Auslasseinrichtung in der Art eines Nadelventils ausgebildet ist.

In den Zeichnungen ist die Erfindung schematisiert dargestellt und wird nachfolgend beispielhaft erläutert.

Es zeigen:
- **Fig. 1**: ein Werkzeug zur Herstellung eines Werkstückes mit angeschäumtem Formteil in einer ersten Prozessphase;
- **Fig. 2**: das Werkzeug gemäß **Fig. 1** in einer zweiten Prozessphase;
- **Fig. 3**: das Werkzeug gemäß **Fig. 1** in einer dritten Prozessphase;
- **Fig. 4**: eine Auslasseinrichtung am Werkzeug gemäß **Fig. 1** im Längsschnitt.

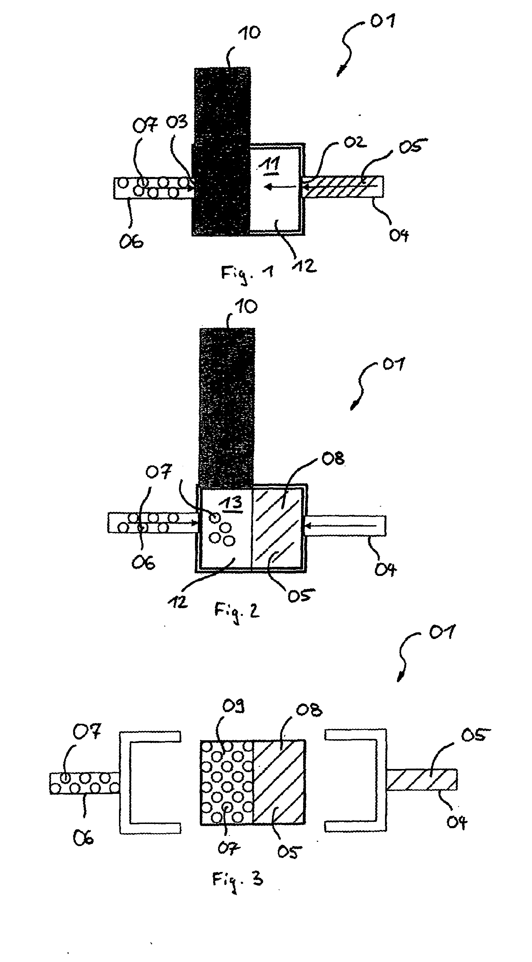

In **Fig. 1** bis **Fig. 3** sind drei Phasen eines Prozesses zur Herstellung eines Werkstückes mit angeschäumtem Formteil schematisiert dargestellt. An einem Werkzeug 01, das in der Form einer Spritzgussform ausgebildet ist, sind zwei Einlassöffnungen 02 und 03 zur Befüllung des Werkzeuges 01 vorgesehen. An die Einlassöffnung 02 ist eine Spritzgießmaschine 04 angeschlossen, von der in **Fig. 1** bis **Fig. 3** nur der vorderste Teil dargestellt ist. In der Spritzgießmaschine 04 kann mittels einer Förderschnecke eine härtbare Formmasse 05, nämlich ein Thermoplast, aufgeschmolzen und durch die Einlassöffnung 02 in das Werkzeug 01 eingefördert werden.

An die Einlassöffnung 03 ist eine Auslasseinrichtung 06 angeschlossen, die Teil einer Vorrichtung zur Herstellung eines unter Druck stehenden Gemischs aus Gas und temperaturhärtendem Material ist. Diese in **Fig. 1** bis **Fig. 3** nicht dargestellte Vorrichtung zur Herstellung eines Gemischs aus Gas und temperaturhärtendem Material kann beispielsweise in einer Bauart ausgebildet sein, wie sie in der DE 696 11 814 T2 beschrieben ist. Durch Betrieb dieser Vorrichtung kann das Gemisch 07 durch die Einlassöffnung 03 in das Werkzeug 01 eingefördert werden.

Zur Herstellung eines Werkstückes 08 mit angeschäumtem Formteil 09 (siehe **Fig. 3**) wird wie folgt vorgegangen. Zunächst wird ein am Werkzeug 01 vorgesehenes Trennelement 10, das in der Form eines Schiebers ausgebildet ist, in das Werkzeug 01 eingefahren, um auf diese Weise einen ersten Bereich 11 im Formnest 12 zu begrenzen. Anschließend wird der erste Bereich 11 des Formnests 12 mit der härtbaren Formmasse 05 ausgespritzt, um auf diese Weise das Werkstück 08 in der gewünschten Geometrie herzustellen.

Nach ausreichender Aushärtung des härtbaren Formstoffes 05 im Formnest 12 wird, wie in **Fig. 2** dargestellt, das Trennelement 10 aus dem Werkzeug 01 herausgefahren, wodurch ein zweiter Bereich 13 im Formnest 12 gebildet wird. Sobald der zweite Bereich 13 vollständig geöffnet ist, wird das Gemisch 07 durch die Auslasseinrichtung 06 und die Einlassöffnung 03 in das Werkzeug 01 eingefördert, wobei das Gemisch 07 auf Grund der dabei stattfindenden Druckentspannung aufschäumt. Auf Grund der Wärme des Werkstücks 08 beginnt das Gemisch 07 nach Einbringung in das Formnest 12 auszuhärten. Soweit erforderlich kann am Werkzeug 01 zusätzlich auch noch eine in **Fig. 1** bis **Fig. 3** nicht dargestellte Heizeinrichtung vorgesehen sein, mit der die Innenwandung des Werkzeugs 01 auf eine gewünschte Temperatur geregelt werden. Sobald der zweite Bereich 13 des Formnests 12 ausreichend mit Gemisch 07 befüllt ist, wird die Einlassöffnung 03 mit einer geeigneten Absperreinrichtung verschlossen, und die im Formnest 12 befindliche Menge des Gemisches 07 wird als aufgeschäumtes Formteil 09 durch Aufnahme von Wärme aus dem Werkstück 08 und/oder dem Werkzeug 01 ausgehärtet.

Wie in **Fig. 3** dargestellt, wird das Werkzeug 01 nach ausreichender Aushärtung des Formteils 09 geöffnet, so dass das Werkstück 08 mit dem daran angeschäumten Formteil 09 aus dem Werkzeug 01 entnommen werden kann.

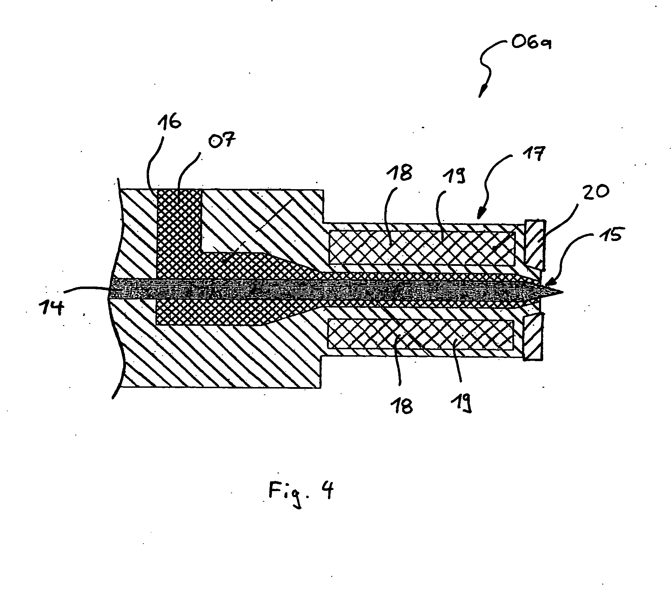

**Fig. 4** zeigt eine besonders geeignete Ausführungsform 06a einer Auslasseinrichtung, die in der Art eines Nadelventils ausgebildet ist. Am Nadelventil 06a ist eine verstellbar gelagerte und horizontal antreibbare Verschlussnadel 14 vorgesehen, durch deren Verstellung die Auslassöffnung 15, die beispielsweise in die Einlassöffnung 03 des Werkzeuges 01 münden kann, geöffnet bzw. verschlossen werden kann. Das Gemisch 07 wird in einer Leitung 16 zur Auslassöffnung 15 geführt. Im vorderen Teil des Nadelventils 06a ist eine Kühleinrichtung 17 vorgesehen, mit der die Leitung 16 und der darin geführte Teil des Gemisches 07 gekühlt werden kann. Zur Bildung der Kühleinrichtung 17 sind im Nadelventil 06a Kühlmittelkanäle 18 vorgesehen, in denen ein entsprechend geeignetes Kühlmittel 19, beispielsweise Wasser, zirkuliert. Das Kühlmittel 19 kann dabei vorzugsweise in einem Kühlmittelkreislauf umgepumpt werden und mittels eines Temperaturregelkreises auf eine gewünschte Soll-Temperatur geregelt werden. Durch Kühlung des Gemisches 07 mit der Kühleinrichtung 17 wird verhindert, dass die Temperaturhärtung des Gemisches 07 bereits im Nadelventil 06a beginnt.

Um möglichst wenig mit der Kühleinrichtung 17 kühlen zu müssen, ist an der Spitze des Nadelventils 06a ein Isolationselement 20 befestigt. Das Isolationselement 20 kommt in unmittelbaren Kontakt mit dem Werkzeug 01 und verhindert, dass die am Werkzeug 01 vorhandene Prozesswärme ungehindert auf das Nadelventil 06a übergeht.

## Patentansprüche

1. Verfahren zur Herstellung eines geschäumten Formteils (09) mit folgenden Verfahrensschritten:
a) Mischen von Gas in ein temperaturhärtendes Material,
b) Aufbringen von Druck auf das Gemisch (07) aus Gas und temperaturhärtendem Material,
c) Durchleiten des druckbeaufschlagten Gemischs (07) durch eine Mischeinrichtung, die das Verteilen des Gases im Inneren des temperaturhärtenden Materials ermöglicht,
d) Schäumen des temperaturhärtenden Materials durch Auslassen des Gemischs (07) auf eine wärmeübertragende Oberfläche (01, 08), deren Temperatur oberhalb der Auslasstemperatur des Gemischs (07) liegt,
e) Härten des Gemischs (07) in Gestalt des gewünschten Formteils (09) durch Beheizen des temperaturhärtenden Materials mittels von der Oberfläche (01, 08) auf das temperaturhärtende Material übergehender Wärme.

2. Verfahren nach Anspruch 1,
**dadurch gekennzeichnet,**
**dass** die Mischeinrichtung in der Art einer Leitung ausgebildet ist, die zumindest so lang ist, dass das Verteilen des Gases im Inneren des temperaturhärtenden Materials durch die aufgebrachte Scherspannung ermöglicht wird.

3. Verfahren nach Anspruch 1 oder 2,
**dadurch gekennzeichnet,**
**dass** das Gemisch (07) aus Gas und temperaturhärtendem Material vor dem Auslassen eine Temperatur im Bereich von 5°C bis 35°C, insbesondere im Bereich von 15°C bis 25°C, aufweist.

4. Verfahren nach einem der Ansprüche 1 bis 3,
**dadurch gekennzeichnet,**
**dass** das Gemisch (07) aus Gas und temperaturhärtendem Material in der Auslasseinrichtung (06) mit einer Kühleinrichtung (17) gekühlt wird.

5. Verfahren nach einem der Ansprüche 1 bis 4,
**dadurch gekennzeichnet,**
**dass** die wärmeübertragende Oberfläche (01, 08) eine Temperatur im Bereich von 60°C bis 150°C, insbesondere im Bereich von 80°C bis 120°C, aufweist.

6. Verfahren nach einem der Ansprüche 1 bis 5,
**dadurch gekennzeichnet,**
**dass** die Temperatur der wärmeübertragenden Oberfläche (01, 08) zumindest bereichsweise mit einem Temperaturregelkreis geregelt wird.

7. Verfahren nach einem der Ansprüche 1 bis 6,
**dadurch gekennzeichnet,**
**dass** das Gas und das temperaturhärtende Material im Verfahrensschritt a) bei einem Druck von 1 kg/cm² oder weniger vorliegen.

8. Verfahren nach einem der Ansprüche 1 bis 7,
**dadurch gekennzeichnet,**
**dass** das Gemisch (07) aus Gas und temperaturhärtendem Material im Verfahrensschritt b) und/oder im Verfahrensschritt c) mit einem Druck von 100 kg/cm² oder mehr, insbesondere mit einem Druck von 150 kg/cm² bis 300 kg/cm², vorliegt.

9. Verfahren nach einem der Ansprüche 1 bis 8,
**dadurch gekennzeichnet,**
**dass** das Gemisch (07) in oder auf ein Werkzeug (01) und/oder in oder auf ein Werkstück (08) gefördert wird, wobei die Kontaktfläche zwischen Gemisch (07) einerseits und Werkzeug (01) und/oder Werkstück (08) andererseits die Oberfläche zur Wärmeübertragung bildet.

10. Verfahren nach, einem der Ansprüche 1 bis 9
**dadurch gekennzeichnet,**
**dass** das Werkzeug (01) und/oder das Werkstück (08) ein geschlossenes Formnest (12) bilden, wobei das Gemisch (07) in das Formnest (12) eingefördert wird und dort aufschäumt.

11. Verfahren nach einem der Ansprüche 1 bis 10,
**dadurch gekennzeichnet,**
**dass** beim Einfördern des Gemischs (07) in das Formnest (12) ein Druckabfall von mindestens 10 bar, insbesondere von mindestens 20 bar, auftritt.

12. Verfahren nach einem der Ansprüche 1 bis 11,
**dadurch gekennzeichnet,**
**dass** das geschäumte Formteil (09) an ein Werkstück (08) angeschäumt wird.

13. Verfahren nach einem der Ansprüche 1 bis 12,
**dadurch gekennzeichnet,**
**dass** zur Bildung eines auszuschäumenden Formnestbereichs ein Werkstück in ein Werkzeug eingelegt wird.

14. Verfahren nach Anspruch 13,
**dadurch gekennzeichnet,**
**dass** das Werkstück unmittelbar vor dem Einlegen in das Werkzeug in einem anderen Werkzeug, insbesondere durch Spritzgießen, hergestellt ist, wobei das Werkstück ohne wesentliche Abkühlung aus dem vorgelagerten Werkzeug in das nachgeordnete Werkzeug umgesetzt wird.

15. Verfahren nach einem der Ansprüche 1 bis 12,
**dadurch gekennzeichnet,**
**dass** das Werkzeug ein in zumindest zwei Bereiche (11, 13) teilbares Formnest (12) aufweist, wobei die verschiedenen Bereiche (11, 13) des Formnests (12) durch Betätigung zumindest eines Trennelements (10) unabhängig voneinander befüllt werden können.

16. Verfahren nach Anspruch 15,
**dadurch gekennzeichnet,**
**dass** der erste Bereich (11) des Formnests (12) unter Herstellung eines Werkstücks (08) mit einer härtbaren Formmasse (05) befüllt wird, nach ausreichender Aushärtung des Werkstücks (08) das Trennelement (10) geöffnet wird und anschließend der zweite Bereich (13) des Formnestes (12) mit dem Gemisch (07) aus Gas und temperaturhärtendem Material derart ausgeschäumt wird, dass sich Werkstück (08) und geschäumtes Formteil (09) miteinander verbinden.

17. Verfahren einem der Ansprüche 1 bis 16,
**dadurch gekennzeichnet,**
**dass** als härtbare Formmasse (05) zur Herstellung des Werkstücks ein Thermoplast eingesetzt wird.

18. Verfahren nach einem der Ansprüche 1 bis 17,
**dadurch gekennzeichnet,**
**dass** das geschäumte Formteil (08) in der Art eines Dichtungselements und/oder Dämpfungselements und/oder Isolatorelements ausgebildet ist.

19. Verfahren nach einem der Ansprüche 1 bis 18,
**dadurch gekennzeichnet,**
**dass** als temperaturhärtendes Material ein Material auf Polyurethanbasis oder Siliconbasis eingesetzt wird.

20. Verfahren nach einem der Ansprüche 1 bis 19,
**dadurch gekennzeichnet,**
**dass** als Gas Stickstoff und/oder Kohlendioxid und/oder Luft eingesetzt wird.

21. Vorrichtung zur Herstellung eines geschäumten Formteils (09) mit
a) einer Mischeinrichtung zum Mischen von Gas mit einem temperaturhärtenden Material,
b) einer Druckpumpe zum Aufbringen von Druck auf das Gemisch (07) aus Gas und temperaturhärtendem Material,
c) einer Mischeinrichtung zum Durchleiten des druckbeaufschlagten Gemischs (07), wobei die Mischeinrichtung das Verteilen des Gases im Inneren des temperaturhärtenden Materials ermöglicht,
d) einer Auslasseinrichtung (06) zum Auslassen des Gemischs (07)
**dadurch gekennzeichnet,**
**dass** der Auslasseinrichtung (06) ein Werkzeug (01) und/oder ein Werkstück (08) nachgeordnet ist, wobei das Gemisch (07) in oder auf das Werkzeug (07) und/oder in oder auf das Werkstück (08) gefördert werden kann, und wobei das Werkzeug (01) und/oder das Material des Werkstücks (08) mit einer Heizeinrichtung derart beheizt werden kann, dass Werkzeug (01) und/oder Werkstück (08) im Kontaktbereich zum Gemisch (07) eine Temperatur oberhalb der Auslasstemperatur des Gemischs (07) aufweisen.

22. Vorrichtung nach Anspruch 20,
**dadurch gekennzeichnet,**
**dass** die Mischeinrichtung in der Art einer Leitung ausgebildet ist, die zumindest so lang ist, dass das Verteilen des Gases im Inneren des temperaturhärtenden Materials durch die aufgebrachte Scherspannung ermöglicht wird.

23. Vorrichtung nach Anspruch 21 oder 22,
**dadurch gekennzeichnet,**
**dass** an der Heizeinrichtung ein Temperaturregelkreis vorgesehen ist.

24. Vorrichtung nach einem der Ansprüche 21 bis 23,
**dadurch gekennzeichnet,**
**dass** das Werkzeug (01) und/oder das Werkstück (08) ein geschlossenes Formnest (12) bilden.

25. Vorrichtung nach Anspruch 24,
**dadurch gekennzeichnet,**
**dass** das Werkzeug (01) ein in zumindest zwei Bereiche (11, 13) teilbares Formnest (12) aufweist, wobei die verschiedenen Bereiche (11, 13) des Formnestes (12) durch Betätigung zumindest eines Trennelements (10) unabhängig voneinander befüllt werden können.

26. Vorrichtung nach Anspruch 25,
**dadurch gekennzeichnet,**
**dass** das Trennelement (10) in der Art eines Schiebers ausgebildet ist.

27. Vorrichtung nach einem der Ansprüche 21 bis 26,
**dadurch gekennzeichnet,**
**dass** das Werkzeug (01) in der Art einer Spritzgussform ausgebildet ist.

28. Vorrichtung nach einem der Ansprüche 21 bis 27,
**dadurch gekennzeichnet,**
**dass** die Heizeinrichtung durch Wasserumlauf, Ölumlauf oder elektrisch beheizbar ist.

29. Vorrichtung nach einem der Ansprüche 21 bis 28,
**dadurch gekennzeichnet,**
**dass** die Auslasseinrichtung (06) in unmittelbaren Kontakt mit dem nachgeordneten Werkzeug (01) und/oder Werkstück bringbar ist.

30. Vorrichtung nach einem der Ansprüche 21 bis 29,
**dadurch gekennzeichnet,**
**dass** die Leitung (16) der Auslasseinrichtung (06a), die zur Führung des Gemischs (07) aus Gas und temperaturhärtendem Material vorgesehen ist, zumindest abschnittsweise mit einer Kühleinrichtung (17) gekühlt werden kann.

31. Vorrichtung nach Anspruch 30,
**dadurch gekennzeichnet,**
**dass** an der Kühleinrichtung (17) ein Temperaturregelkreis vorgesehen ist.

32. Vorrichtung nach Anspruch 30 oder 31,
**dadurch gekennzeichnet,**
**dass** die mit der Kühleinrichtung (17) kühlbaren Leitungsabschnitte aus einem hoch wärmeleitfähigen Material, insbesondere aus einem hoch wärmeleitfähigen Metall, beispielsweise auf Kupferbasis, hergestellt sind.

33. Vorrichtung nach einem der Ansprüche 21 bis 32,
**dadurch gekennzeichnet,**
**dass** an der Außenseite der Auslasseinrichtung (06a), insbesondere in Bereichen, die in unmittelbaren Kontakt mit dem nachgeordneten Werkzeug (01) und/oder Werkstück bringbar sind, ein wärmeisolierendes Isolationselement (20), insbesondere aus einem wärmeisolierenden Metall, angeordnet ist.

34. Vorrichtung nach einem der Ansprüche 21 bis 33,
**dadurch gekennzeichnet,**
**dass** die Auslasseinrichtung (06a) in der Art eines Nadelventils ausgebildet ist.
